Europäisches Patentamt

European Patent Office

Office européen des brevets

(19)

(11) Veröffentlichungsnummer: **0 129 193**
**B1**

(12) **EUROPÄISCHE PATENTSCHRIFT**

(45) Veröffentlichungstag der Patentschrift:
14.06.89

(21) Anmeldenummer: 84106725.9

(22) Anmeldetag: 13.06.84

(51) Int. Cl.⁴: **C 08 L 75/04,** C 08 K 3/04,
C 08 G 18/65, C 08 G 18/76,
C 08 J 5/18, H 01 B 1/24

(54) Verfahren zur Herstellung von antistatischen und/oder elektrisch leitfähigen thermoplastischen Polyurethanen sowie deren Verwendung.

(30) Priorität: 15.06.83 DE 3321516

(43) Veröffentlichungstag der Anmeldung:
27.12.84 Patentblatt 84/52

(45) Bekanntmachung des Hinweises auf die Patenterteilung:
14.06.89 Patentblatt 89/24

(84) Benannte Vertragsstaaten:
AT BE CH DE FR GB IT LI NL SE

(56) Entgegenhaltungen:
EP-A- 0 097 899
US-A- 4 265 789

PATENT ABSTRACTS OF JAPAN, Band 7, Nr. 161
(C-176)[1306], 15. Juli 1983; & JP - A - 58 69247 (HITACHI
DENSEN K.K.) 25.04.1986 (Kat. X)
RESEARCH DISCLOSURE, Nr. 136, August 1975, Seite
26, AKZO CHEMIE: "Use of the electroconductive
carbon Ketjenblack"

(73) Patentinhaber: BASF Aktiengesellschaft,
Carl-Bosch-Strasse 38, D-6700 Ludwigshafen (DE)

(72) Erfinder: Zeitler, Gerhard, Dr., Lessingstrasse 11,
D-6717 Hessheim (DE)
Erfinder: Bittner, Gerhard, Dr., Lohneufer 36,
D-2840 Diepholz 1 (DE)
Erfinder: Faehndrich, Knud, Postfach 1140,
D-2844 Lemfoerde (DE)
Erfinder: Rombrecht, Hans Malte, Dr.,
D-2844 Quernheim 93 (DE)

**Beschreibung**

Thermoplastische Polyurethan-elastomere, im folgenden abgekürzt TPU genannt, sind seit langem bekannt. Ihre technische Bedeutung beruht auf der Kombination hochwertiger mechanischer Eigenschaften mit den Vorteilen der kostengünstigen Thermoplastverarbeitung. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978), Seiten 819–825 oder kautschuk, Gummi, Kunststoffe 35 (1982), Seiten 568–584 gegeben.

TPU können kontinuierlich oder diskontinuierlich nach verschiedenen Verfahren hergestellt werden. Als die bekanntesten werden das sogenannte Bandverfahren und das Extruderverfahren auch technisch genutzt.

Nach der GB-PS 1 057 018 wird aus einer im wesentlichen linearen Polyhydroxylverbindung und überschüssigem organischen Diisocyanat ein Prepolymeres hergestellt, das über eine Dosierpumpe einem Mischkopf zugeführt und dort mit einer bestimmten Menge eines niedermolekularen Diols gemischt wird. Das erhaltene Reaktionsgemisch wird auf ein Förderband gebracht und durch einen auf 70 bis 130 °C erhitzten Ofen geführt, bis es erstarrt. Das Reaktionsprodukt wird danach zerkleinert, bei Temperaturen bis 120 °C 6 bis 40 Stunden getempert und kann so z.B. mit Spritzgußmaschinen zu Formkörpern verarbeitet werden.

Beim Extruderverfahren, das z.B. in der DE-OS 20 59 570 (US 3 642 964) beschrieben wird, werden die Aufbaukomponenten direkt in den Extruder eingebracht und die Reaktion im Extruder unter bestimmten Verfahrensbedingungen durchgeführt. Das gebildete Polyurethan-Elastomere wird in den thermoplastischen Zustand übergeführt, als Strang extrudiert, in einer Inertgasatmosphäre bis zum Erstarren abgekühlt und zerkleinert. Nachteilig an diesem Verfahren ist, daß die erhaltenen TPU nicht für die Herstellung von Folien oder von feinen Profilen und Schläuchen geeignet sind. TPU gleicher Zusammensetzung sind nach dem Extruderverfahren transparent, während sie nach dem Bandverfahren ein opakes Aussehen aufweisen. Opake TPU können zu Folien verarbeitet werden, die kein Blocken zeigen, während transparente TPU hierfür ungeeignet sind.

Zur Vermeidung dieser Nachteile wird nach Angaben der EP-OS 97899 die Herstellung von TPU bei Temperaturen von 60 bis 250 °C in zwei Reaktionsstufen durchgeführt, wobei man in der ersten Reaktionsstufe die Aufbaukomponenten kontinuierlich mischt, die Reaktionsmischung auf einen Träger aufbringt und bis zur Erstarrung bei der jeweiligen Reaktionstemperatur partiell reagieren läßt und danach in der zweiten Reaktionsstufe die nicht ausreagierte, erstarrte Reaktionsmischung in einem Extruder aufschmilzt und die Reaktion zu Ende führt.

Nach diesem Verfahren hergestellte TPU besitzen verbesserte mechanische Eigenschaften und können entsprechend den nach dem Bandverfahren erhaltenen Produkte zu Polyurethan-Folien und -Formkörpern verarbeitet werden.

Polyurethanelastomere können ferner durch Zusätze modifiziert werden. Zur Verbesserung der Hydrolysenfestigkeit kommen in ortho-Stellung substituierte Diarylcarbodiimide in Mengen von höchstens 2 Gew.-% der Gesamtmischung zur Anwendung. Polyurethanelastomere mit niedrigem Reibungskoeffizient werden erhalten, wenn feste oder flüssige Schmierstoffe bzw. Mischungen von ihnen eingemischt werden. Geeignete Schmierstoffe sind beispielsweise Graphit oder Molybdändisulfid, die meist mit Paraffin oder Silikonöl gemischt werden. Auch hiervon werden insgesamt maximal 3 Gew.-% hinzugefügt, da mit größeren Mengen der Schmiereffekt nicht gesteigert, die mechanischen Eigenschaften jedoch vermindert werden. Ein verbessertes antistatisches Verhalten kann durch Zusatz von leitenden Farbrußen oder antistatischen Weichmachern erreicht werden. Da jedoch Farbruße eine starke, unerwünschte Viskositätserhöhung bewirken, ist die verarbeitbare Menge auf wenige Prozente beschränkt.

In Polyurethanelastomere können außerdem nach der Kautschuktechnologie Füllstoffe verschiedenster Art in großen Mengen eingearbeitet werden. So erzielt man z.B. durch Zusatz von Kaolin eine geringe, von gefällter Kieselsäure eine stärkere und von pyrogen gewonnener Kieselsäure die größte Verstärkerwirkung. Ähnliches gilt für die Wahl der Ruße, die gelegentlich ein noch höheres Eigenschaftsniveau erreichen lassen als die hellen Füllstoffe. Walzbare Polyurethanelastomere vermögen hierbei auf 100 Gew.-Teile oft 60 bis 100 Gew.-Teile eines inaktiven bis halbaktiven und 20 bis 60 Gew.-Teile eines hochaktiven Füllstoffes aufzunehmen. (Kunststoff-Handbuch, Band VII, Polyurethane von R. Vieweg und A. Höchtlen, Carl Hanser Verlag, München 1966,. Seiten 206 ff.)

Auf diese Weise modifizierte Polyurethanelastomere besitzen jedoch, falls überhaupt, nur eine geringe Leitfähigkeit; besonders gravierend war vielfach jedoch der Abfall der mechanischen Eigenschaften und deren Verarbeitbarkeit zu Formkörpern.

Die Aufgabe der vorliegenden Erfindung bestand darin, antistatische und/oder elektrisch leitfähige TPU nach einem wirtschaftlichen Verfahren mit guten mechanischen Eigenschaften herzustellen. Bei vergleichbarem mechanischem Eigenschaftsniveau sollte insbesondere das antistatische Verhalten und/oder die elektrische Leitfähigkeit erheblich verbessert werden.

Diese Aufgabe konnte Überraschenderweise gelöst werden mit Hlfe einer speziellen Rußmodifikation und deren Einarbeitung in TPU bei Temperaturen unterhalb des Hauptschmelzpeaks der kristallinen Hartsegmente, gemessen nach der Differentialkalorimetrie (DSC).

Gegenstand der Erfindung ist somit ein Verfahren zur Herstellung von antistatischen und/oder elektrisch leitfähigen TPU'S, die dadurch gekennzeichnet sind, daß sie Ruß enthalten, der

1. eine Oberfläche nach der BET-Methode von 600 bis 1200 m²/g, vorzugsweise von 800 bis 1000 m²/g (ASTM D-3037),

2. ein Dibutylphthalat-Absorptionsporenvolumen von 300 bis 450 cm³, vorzugsweise von 350 bis 420 cm³ pro 100 g Ruß (ASTM D-2414),

3. eine Perldichte von weniger als 250 kg/m³, vorzugsweise von 100 bis 200 kg/m³ (ASTM D-1513) und

4. eine durchschnittliche Teilchengröße von weniger als 50 nm, vorzugsweise von 20 bis 50 nm besitzt.

Ruße, die die erfindungsgemäß erforderlichen Merkmale erfüllen, werden beispielsweise unter dem Warenzeichen XE-2 der Philips Petroleum Chemicals und Ketgenblack EC der Akzo Chemie vermarktet.

Bereits durch die Einarbeitung von Ruß mit den obengenannten kennzeichnenden Merkmalen kann die elektrische Leitfähigkeit von TPU erheblich verbessert werden.

Die elektrische Leitfähigkeit des TPU erhöht sich hierbei mit zunehmender Rußkonzentration, während der elektrische Widerstand entsprechend abfällt. Der erfindungsgemäß geeignete Ruß wird in solchen Mengen eingesetzt, daß die antistatisch und/oder elektrisch leitfähigen, thermoplastischen Polyurethane 2 bis 35 Gew.-%, vorzugsweise 3 bis 25 Gew.-% Ruß, bezogen auf das Gesamtgewicht enthalten, wobei zur Verbesserung des antistatischen Verhaltens Ruß in einer Menge von 3 bis 7 Gew.-% und zur Erhöhung der Leitfähigkeit in einer Menge von 10 bis 25 Gew.-% insbesondere Anwendung finden.

Zur Einarbeitung des Rußes wird das TPU durch Erwärmen auf Temperaturen von ungefähr 190 bis 220 °C in den plastischen Zustand übergeführt und nach Zugabe des Rußes mit Hilfe von üblichen aus der Kautschukindustrie bekannten Vorrichtungen bearbeitet. Als geeignete Vorrichtungen seien beispielsweise Kneter und Extruder genannt, wobei Doppelwellenextruder vorzugsweise Anwendung finden.

Zur Herstellung von TPU mit einem optimalen antistatischen Verhalten und/oder einer optimalen elektrischen Leitfähigkeit muß der erfindungsgemäß verwendbare Ruß jedoch nach einem speziellen Verfahren in das TPU eingearbeitet werden. Wesentliches Merkmal dieses Verfahrens, das vorzugsweise Anwendung findet, ist die Temperatur der Rußeinverleibung, die unterhalb, zweckmäßigerweise mindestens 1 °C und vorzugsweise 3 bis 8 °C unterhalb des Hauptschmelzpeaks der kristallinen Hartsegmente, gemessen nach der Differentialkalorimetrie, liegen muß. Der mögliche TPU-Durchsatz im Extruder hängt dabei von der einzubringenden Rußmenge ab. Je größer die einzuarbeitende Rußmenge ist, um so kleiner muß die Durchsatzgeschwindigkeit des Extruders eingestellt werden, daß die Temperatur des Hauptschmelzpeaks nicht überschritten wird. Die Raumzeitausbeute wird dadurch verringert. Erfolgt die Rußeinarbeitung bei der Temperatur des Hauptschmelzpeaks der TPU oder darüber, so vermindert sich die elektrische Leitfähigkeit. Obgleich die chemischen und physikalischen Gründe hierfür im einzelnen noch nicht untersucht sind, wird angenommen, daß durch teilweises oder vollständiges Aufschmelzen der kristallinen Hartsegmente und durch den Zusatz von Ruß die Morphologie des wieder erstarrten TPU in einer für die Leitfähigkeit nachteiligen Weise verändert wird.

Die verfahrensgemäß hergestellten antistatischen und/oder elektrisch leitfähigen Polyurethane besitzen als Basiskunststoff nach dem Bandverfahren hergestelltes TPU. Diese können beispielsweise aus den Aufbaukomponenten (a) bis (d) und gegebenenfalls (e) hergestellt werden, zu denen wir folgendes aufführen möchten:

a) Als organische Diisocyante (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylendiisocyanat, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-di-isocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-(1,2) und 1,5-Naphthylen-diisocyanat. Vorzugsweise verwendet werden 1,6-Hexamethylendiisocyanat, Isophoron-diisocyanat, Diphenylmethan-diisocyanat-Isomerengemische mit einem 4,4'-Diphenylmethan-diisocyanatgehalt von größer als 96 Gew.% und insbesondere 4,4'-Diphenylmethan-diisocyanat und 1,5-Naphthylen-diisocyanat.

Als höhermolekulare Polyhydroxylverbindungen (b) mit Molekulargewichten von 500 bis 8000 eignen sich vorzugsweise Polyetherole und insbesondere Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung, mit den obengenannten Molekulargewichten. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt; Ethylenoxid, 1,2-Propylenoxid, Epichlorhydrin und 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanol-amine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Vorzugsweise verwendet werden hydroxylgruppenhaltiges Polytetrahydrofuran und Polyetherole aus Propylenoxid-1,2 und Ethylenoxid, in denen mehr als 50%, vorzugsweise 60 bis 80% der OH-Gruppen primäre Hydroxylgruppen sind und bei denen zumindest ein Teil des Ethylenoxids als endständiger Block angeordnet ist.

Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.

Die im wesentlichen linearen Polyetherole besitzen Molekulargewichte von 500 bis 8000, vorzugsweise 600 bis 6000 und insbesondere 800 bis 3500. Sie können sowohl einzeln als auch in From von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Carbonsäuren die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-butandiol-1,4-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 6000, vorzugsweise von 800 bis 3500.

c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di- -(β-hydroxyethyl)-hydrochinon, (cyclo)aliphatische Diamine, wie z.B. Isophoron-diamin, Ethylendiamin, 1,2-, 1,3-Propylendiamin, N-Methyl-propylendiamin-1,3, N,N′-Dimethyl-ethylen-diamin und aromatische Diamine, wie z.B. 2,4- und 2,6-Toluylen-diamin, 3,5-Diethyl-2,4- und -2,6-toluylen-diamin und primäre orthodi-, tri- und/oder tetraalkylsubstituierte 4,4′-Diamino-diphenylmethane.

Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1:1 bis 1:12, insbesondere von 1:1,8 bis 1:6,4, wobei die Härte und der Schmelzpunkt der TPU mit zunehmendem Gehalt an Diolen ansteigt.

Zur Herstellung der TPU werden die Aufbaukomponenten (a), (b) und (c) in Gegenwart von Katalysatoren (d) und gegebenenfalls Hilfsmitteln und/oder Zusatzstoffen (e) in solchen Mengen zur Reaktion gebracht, daß das Äquivalenzverhältnis von NCO-Gruppen der Diisocyanate zur Summe der Hydroxylgruppen oder Hydroxyl- und Aminogruppen der Komponenten (b) und (c) 1:0,85 bis 1:1,20, vorzugsweise 1:0,95 bis 1:1,05 und insbesondere ungefähr 1:1,02 beträgt.

(d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxi)-ethanol, Diazabicyclo-(2,2,2)-octan und ähnliche sowie insbesonders organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Gew.-Teilen pro 100 Gew.-Teilen Polyhydroxylverbindung eingesetzt.

Neben Katalysatoren können den Aufbaukomponenten auch Hilfsmittel und/oder Zusatzstoffe (e) einverleibt werden. Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe, Verstärkungsmittel und Weichmacher.

Nähere Angaben über die obengenannten Hilfsmittel- und Zusatzstoffe sind der Fachliteratur, beispielsweise der Monographie von J.H. Saunders und K.C. Frisch «High Polymers», Band XVI, Polyurethane, Teil 1 und 2, Verlag Interscience Publishers 1962 bzw. 1964 oder der DE-OS 29 01 774 zu entnehmen.

Die Herstellung der TPU nach dem Bandverfahren wird im einzelnen auf folgende Weise durchgeführt:

Die Aufbaukomponenten (a) bis (d) und gegebenenfalls (e) werden bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise ein Förderband, aufgebracht und durch eine temperierte Zone geführt. Die Reaktionstemperatur in der temperierten Zone beträgt 60 bis 200 °C, vorzugsweise 100 bis 180 °C und die Verweilzeit 0,05 bis 0,5 Stunden, vorzugsweise 0,1 bis 0,3 Stunden.

Nach beendeter Reaktion wird das TPU, das eine Härte von Shore A 60 bis Shore D 70, vorzugsweise Shore A 60 bis Shore A 98 besitzt und z.B. in Abhängigkeit von den Aufbaukomponenten bei Shore A von 85 bis 98 einen Hauptschmelzpeak von 212 bis 216 °C bzw. 220 bis 225 °C aufweist, abkühlen gelassen, zerkleinert oder granuliert und zwischengelagert oder direkt mit dem erfindungsgemäß verwendbaren Ruß versetzt.

Hierzu wird das zerkleinerte oder granulierte TPU mit dem Ruß gepudert oder gemischt und beispielsweise mit einem Kneter 0,05 bis 0,2 Stunden vorzugsweise 0,08 bis 0,12 Stunden in plastischem Zustand oder vorzugsweise einem Extruder, insbesondere Doppelschneckenextruder in der Schmelze, bei Verweilzeiten im Extruder von 0,5 bis 15 Minuten, vorzugsweise 1 bis 6 Minuten, vorteilhafterweise bei Temperaturen von 190 bis 220 °C, vorzugsweise von 207 bis 217 °C bearbeitet, mit der Maßgabe, daß die Verarbeitungstemperatur unterhalb des Hauptschmelzpeaks der kristallinen Hartsegmente, gemessen nach der Differentialkalorimetrie, liegt. Am Ausgang des Extruders kann das fertige, den erfindungsgemäß verwendbaren Ruß enthaltende TPU direkt in einer Inertgasatmosphäre, z.B. in Stickstoff, durch Heißabschlag zu Granulat konfektioniert werden.

Die nach dem erfindungsgemäßen Herstellungsverfahren erhaltenen Produkte besitzen neben guten mechanischen Eigenschaften ein sehr gutes antistatisches Verhalten und/oder eine hohe elektrische Leitfähigkeit.

Die TPU mit einem geringen Rußgehalt, beispielsweise bis ungefät 7 Gew.-%, werden vorzugsweise zur Herstellung von Schläuchen, Profilen oder Kabeln verwendet, für die eine antistatische Ausrüstung, z.B. bei Schläuchen für die Förderung von brennbaren Lösungsmitteln oder für elektrische Kabeln im Bergbau, gefordert wird. Die Produkte mit höherem Rußgehalt und damit größerer elektrischer Leitfähigkeit können zu Folien verarbeitet werden, die sich beispielsweise zur Herstellung von Flächenheizelementen eignen und z.B. bei Foliendicken von 1 bis 2 mm Leistungen von ungefähr 100 bis 200 Watt/m² erbringen.

Auch bei der Verarbeitung der nach dem erfindungsgemäßen Verfahren hergestellten TPU zu Formkörpern ist es zweckmäßig, die Verarbeitungstemperaturen so zu wählen, daß der Hauptschmelzpeak der kristallinen Hartsegmente nicht erreicht oder überschritten wird.

Beispiele 1–4 – Vergleichsbeispiel A

Ein TPU, hergestellt nach dem Bandverfahren bei einer Temperatur von 140 °C aus einem Butandiol-1,4-adipat mit einem Molekulargewicht von 2000, 4,4'-Diphenylmethan-diisocyanat und Butandiol-1,4, mit einer Härte von Shore A 80, einem Hauptschmelzpeak nach DSC von 210 °C und einer Schmelzviskosität, einem MFI (melt flow index) entsprechend bei 190 °C und einem Auflagegewicht von 21,6 kp von 12 und Ruß mit einer durchschnittlichen Teilchengröße von 30 nm, einer Schüttdichte von 150 g/L, einer Oberfläche von ungefähr 800 m²/g, einem Dibutylphthalat-Absorptionsporenvolumen von 400 cm³/100 g und einer Perldichte von 180 kg/m³ (Ruß XE der Firma Philipps Petroleum Chemicals) wurden in einem Doppelschneckenextruder der Firma Werner und Pfleiderer aufgeschmolzen, gemischt und durch eine Lochdüse zu Strängen gepreßt, die nach dem Abkühlen in üblicher Weise zu Granulat zerkleinert wurden. Die dem Extruder zugeführte TPU- und Rußmenge (Durchsatz) und die Drehzahl der Extruderschnecke wurden so gesteuert, daß die Massetemperatur vor der Lochdüse maximal 208 °C betrug.

Bei Verwendung größerer Rußmengen wurde zur Aufrechterhaltung der Massetemperatur von maximal 208 °C der Durchsatz entsprechend verringert.

Das Ruß enthaltende Granulat wurde bei 200 °C zu Prüfplatten verpreßt, an denen die folgenden mechanischen Eigenschaften gemessen wurden:

| Beispiele<br>Vergleichsbeispiel | 1 | 2 | 3 | 4 | A |
|---|---|---|---|---|---|
| Rußgehalt (Gew.-%, bezogen auf Gesamtgewicht) | 7 | 10 | 14 | 20 | – |
| Spezifischer Widerstand nach DIN 53 482 (Ohm.m) | 1,4 | 0,2 | 0,03 | 0,01 | $10^9$ |
| Reißfestigkeit nach DIN 53 504 (N/mm²) | 40 | 38 | 32 | 20 | 41 |
| E-Modul nach DIN 53 457 (N/mm²) | 20 | 28 | 35 | 43 | 12 |
| Abriebwerte nach DIN 53 516 (mm³) | 45 | 50 | 55 | 85 | 45 |

**Vergleichsbeispiele B und C**

Man verfuhr analog den Angaben der Beispiele 1 und 3, erhöhte jedoch die Massetemperatur auf 212 °C oder darüber durch Vergrößerung des Durchsatzes oder eine Temperaturerhöhung, so erhielt man Prüfplatten mit folgenden mechanischen Eigenschaften:

| Vergleichsbeispiel | B | C |
|---|---|---|
| Rußgehalt (Gew.-%, bezogen auf das Gesamtgewicht des rußhaltigen TPU) | 7 | 14 |
| Spezifischer Widerstand nach DIN 53 482 (Ohm.m) | $6.10^4$ | > 1 |
| Reißfestigkeit nach DIN 53 504 (N/mm²) | 21 | 15 |

**Beispiel 5**

90 Gew.-Teile eines TPU, hergestellt nach dem Bandverfahren bei einer Temperatur von 155 °C aus einem Polytetramethylenether-glykol mit einem Molekulargewicht von 1000, 4,4'-Diphenylmelthan-diisocyanat und Butandiol-1,4, mit einer Härte nach Shore A von 85, einem Hauptschmelzpeak nach DSC von 216 und einer Schmelzviskosität, einem MFI entsprechend bei 190 °C und einem Auflagegewicht von 21,6 kp von 10 und 10 Gew.-Teile Ruß XE der Firma Phillips Petroleum Chemicals wurden analog den Angaben der Beispiele 1–4 so plastifiziert, daß die Massetemperatur 212 °C nicht überschritt.

Das Ruß enthaltende Granulat wurde zu Prüfplatten verpreßt, die einen spezifischen Widerstand nach DIN 53 482 von 0,8 Ohm.m und eine Reißfestigkeit nach DIN 53 504 von 39 N/mm² besaßen.

**Vergleichsbeispiel D**

Verfuhr man analog den Angaben von Beispiel 5, bearbeitete jedoch die TPU-Ruß-Mischung im Doppelschneckenextruder bei einer Temperatur größer als 216 °C, so besaßen die Prüfplatten einen spezifischen Widerstand nach DIN 53 482 von 2.10² Ohm.m und eine Reißfestigkeit von DIN 53 504 von 16 N/mm².

**Patentansprüche**

1. Verfahren zur Herstellung von antistatischen und/oder elektrisch leitfähigen, thermoplastischen Polyurethanen, dadurch gekennzeichnet, daß man
A) aus
  a) organischen Diisocyanaten,

  b) Polyhydroxylverbindungen mit Molekulargewichten von 500 bis 8000 und
  c) Kettenverlängerungsmitteln mit Molekulargewichten von 60 bis 400 in Gegenwart von
  d) Katalysatoren und
  e) gegebenenfalls Hilfsmitteln und/oder Zusatzstoffen nach dem Bandverfahren thermoplastische Polyurethane herstellt und
B) diesen bei Temperaturen unterhalb des Hauptschmelzpeaks der kristallinen Hartsegmente, gemessen nach der Differentialkalorimetrie (DSC) Ruß mit
  1. einer Oberfläche nach der BET-Methode von 600 bis 1200 m²/g,
  2. einem Dibutylphthalat-Absorptionsporenvolumen von 300 bis 450 cm³ pro 100 g,
  3. einer Perldichte von weniger als 250 kg/m³ und
  4. einer durchschnittlichen Teilchengröße von weniger als 50 nm einverleibt.

2. Verfahren nach Anspruch 1, dadurch gekennzeichnet, daß man die Aufbaukomponenten (a) bis (d) und gegebenenfalls (e) bei Temperaturen oberhalb des Schmelzpunktes kontinuierlich mischt,
die Reaktionsmischung auf einen Träger aufbringt,
bei Temperaturen von 60 bis 200 °C auf dem Träger ausreagieren läßt,
die erstarrten, eine Härte von Shore A 60 bis Shore D 70 aufweisenden thermoplastischen Polyurethane in einem Extruder aufschmilzt,
bei Temperaturen unterhalb des Hauptschmelzpeaks der kristallinen Hartsegmente, gemessen nach der Differentialkalorimetrie, den Ruß einarbeitet
und das extrudierte Polyurethan granuliert.

3. Verfahren nach Anspruch 1, dadurch gekennzeichnet, daß man als organische Diisocyanate 4,4'-Diphenylmethan-diisocyanat oder 1,5-Naphthylen-diisocyanat verwendet.

4. Verfahren nach Anspruch 1, dadurch gekennzeichnet, daß man als Polyhydroxylverbindungen im wesentlichen lineare Polyesterole aus Adipinsäure und Diolen mit 2 bis 6 Kohlenstoffatomen, Polycaprolactone und/oder Polytetrahydrofuran verwendet.

5. Verwendung der nach Anspruch 1 hergestellten antistatischen und/oder elektrisch leitfähigen, thermoplastischen Polyurethane zur Herstellung von Folien, Schläuchen, Kabeln oder Profilen.

6. Verwendung der nach Anspruch 1 hergestellten elektrisch leitfähigen, thermoplastischen Polyurethane zur Herstellung von Folien mit einer Dicke von 1 bis 2 mm für Flächenheizelemente.

## Claims

1. A process for the preparation of an antistatic and/or electrically conductive thermoplastic polyurethane, wherein
A) a thermoplastic polyurethane is prepared by the belt method from
    a) an organic diisocyanate
    b) a polyhydroxy compound having a molecular weight of from 500 to 8,000 and
    c) a chain extender having a molecular weight of from 60 to 400 in the presence of
    d) a catalyst and,
    e) if required, assistants and/or additives, and
B) carbon black having
    1. a BET specific surface area of from 600 to 1,200 m²/g,
    2. a dibutyl phthalate absorption pore volume of from 300 to 450 cm³ per 100 g,
    3. a bead density of less than 250 kg/m³ and
    4. a mean particle size of less than 50 nm is incorporated into the said polyurethane at below the main melting peak of the crystalline hard segment, measured by differential scanning calorimetry (DSC).

2. A process as claimed in claim 1, wherein the components (a) to (d) and, if required, (e) are continuously mixed at above the melting point, the reaction mixture is applied to a substrate and allowed to react completely at from 60 to 200 °C on the substrate, the solidified thermoplastic polyurethane having a hardness of from Shore A 60 to Shore D 70 is melted in an extruder, the carbon black is incorporated at below the main melting peak of the crystalline hard segment, measured by differential scanning calorimetry, and the extruded polyurethane is granulated.

3. A process as claimed in claim 1, wherein the organic diisocyanate used is 4,4'-diphenylmethane diisocyanate or 1,5-naphthylene diisocyanate.

4. A process as claimed in claim 1, wherein the polyhydroxy compounds used are essentially linear polyesterols obtained from adipic acid and diols of 2 to 6 carbon atoms, polycaprolactones and/or polytetrahydrofuran.

5. Use of an antistatic and/or electrically conductive thermoplastic polyurethane prepared as claimed in claim 1 for the production of sheets, tubes, cables or profiles.

6. Use of an electrically conductive thermoplastic polyurethane prepared as claimed in claim 1 for the production of sheets having a thickness of from 1 to 2 mm for sheet-like heating elements.

## Revendications

1. Procédé de fabrication de polyuréthannes thermoplastiques, conducteurs de l'électricité et/ou antistatiques, caractérisé en ce que
A) on fabrique des polyuréthannes thermoplastiques selon le procédé à bande, au départ
    a) de diisocyanates organiques,
    b) de composés polyhydroxylés possédant des poids moléculaires qui varient de 500 à 8000 et
    c) d'agents d'allongement des chaînes, qui possèdent des poids moléculaires de 60 à 400, en présence
    d) de catalyseurs et
    e) éventuellement d'adjuvants et/ou d'additifs et
B) on leur incorpore, à des températures inférieures à la pointe de fusion principale des segments durs, cristallins, mesurées par calorimétrie à exploration différentielle (DSC), du noir de carbone comportant
    1. une surface active, selon le procédé BET, de 600 à 1200 m²/g,
    2. un volume de pores d'absorption du phtalate de dibutyle de 300 à 450 cm³ par 100 g,
    3. un poids spécifique des perles inférieur à 250 kg/m³ et
    4. un calibre moyen des particules inférieur à 50 nm.

2. Procédé suivant la revendication 1, caractérisé en ce que l'on mélange en continu les composants constitutifs (a) à (d) et éventuellement (e) à des températures supérieures au point de fusion, on dépose le mélange réactionnel sur un support, on le laisse réagir sur le support à des températures qui varient de 60 à 200 °C, on fait fondre les polyuréthannes thermoplastiques solidifiés, présentant une dureté qui va de la valeur Shore A 60 à la valeur Shore D 70, dans une extrudeuse, on y incorpore le noir de carbone à des températures inférieures à la pointe de fusion principale des segments durs, cristallins, mesurées par calorimétrie à exploration différentielle, et on granule le polyuréthanne extrudé.

3. Procédé suivant la revendication 1, caractérisé en ce qu'à titre de diisocyanates organiques, on utilise le diisocyanate de 4,4'-diphénylméthane ou le diisocyanate de 1,5-naptylène.

4. Procédé suivant la revendication 1, caractérisé en ce qu'à titre de composés polyhydroxylés, on utilise des polyestérols essentiellement linéaires, obtenus au départ d'acide adipique et de diols possédant de 2 à 6 atomes de carbone, des polycaprolactones et/ou du polytétrahydrofuranne.

5. Utilisation des polyuréthannes thermoplastiques, conducteurs de l'électricité et/ou antistatiques, fabriqués selon la revendication 1, pour la fabrication de feuilles, de tuyaux souples, de câbles ou de profilés.

6. Utilisation des polyuréthannes thermoplastiques, conducteurs de l'électricité, fabriqués selon la revendication 1, pour la fabrication de feuilles possédant une épaisseur de 1 à 2 mm, destinées à la confection d'éléments de chauffage à surface étendue.